# EUROPEAN PATENT SPECIFICATION

(11) **EP 2 916 147 B1**
(45) Date of publication and mention of the grant of the patent: **15.08.2018**
(21) Application number: 15000514.8
(22) Date of filing: 23.02.2015
(51) Int. Cl.: G01V 8/20, F16P 3/14, G06K 9/28, G06K 9/62, G08B 13/196, G08B 13/183

(54) **An optoelectronic safety barrier for detecting intrusions**
Optoelektronische Sicherheitsschranke zum Erfassen von Eindringungen
Barrière de sécurité optoélectronique permettant de détecter des intrusions

(30) Priority: 06.03.2014 IT TO20140180
(43) Date of publication of application: 09.09.2015
(73) Proprietor: REER S.p.A., I-10153 Torino (IT)
(72) Inventor: Mirandola, Francesco, I-10097 Collegno (TO) (IT)
(74) Representative: Modiano, Micaela Nadia

(56) References cited:
- WO-A1-02/33671
- WO-A1-2007/020666
- US-A- 6 075 238
- US-A1- 2005 017 157
- US-A1- 2012 268 274

## Description

### Disclosure

This invention is concerned with an optoelectronic safety barrier for detecting persons or parts of persons entering a passage leading to a forbidden area, such as the environment of an industrial machine in operation, so that the machine can be stopped before an accident occurs. However, the invention could be used as well in other kinds of surveillance, e.g., insuring the safety of persons in elevators, watching over areas at risk of thefts, particularly in banks, and other similar tasks.

Optoelectronic barriers have been used for many years in the surveillance of passages leading to hazardous areas. The barriers typically comprise a column bearing an array of infrared LEDs (typically two to four pairs), which send their collimated rays to a corresponding array of photodiodes carried on an opposite column across the passage, whereby the interruption of any ray is detected and considered to be a violation of the passage. An example of this type of barrier is described in EP 567 717. However, the optoelectronic barriers using LEDs and photodiodes are expensive systems, also because of the wiring needed to power, scan and monitor the LEDs and photodiodes on both columns. In order to simplify the wiring, and as described for example in DE 195 04 230, barriers have more recently been introduced in which both the LEDs and the photodiodes are located on one column only, while the opposite column is passive, and only has mirrors reflecting the rays emitted from the LEDs back to the photodiodes. The need to wire both columns is thereby avoided, because the passive column does not require any wiring, neither for power supply nor for signalling.

A drawback of the latter type of optoelectronic barrier is that its setup is cumbersome and delicate, as will be evident for the expert in the field, due to the need to ensure a correct alignment between the mirrors, the ray emitted by the LED and the visual field of the photodiode, particularly in view of the IEC 61496-2 standard regulating optoelectronic barriers, which requires that the aperture of the optical beam should be no broader than 5° in barriers classified as Type 4. Moreover, the complexity of the setup increases dramatically when barriers with several LED-photodiode pairs on the same column are to be implemented.

More recently, systems for gate protection or monitoring have been proposed which are based on using a camera which views a known geometric pattern, and compare the current image of the pattern with a reference image representing a condition of non-intrusion. Such systems, however, mostly require that the camera is positioned above, or at least at some distance from the passage, and therefore are not suitable for readily replacing a conventional IR barrier, which is fully contained in two columns delimiting the passage, because a camera close to the scene of interest would inevitably give rise to blind spots in the surveillance.

Accordingly, a main object of the present invention is to provide a safety barrier for protecting gates and the like, which may be a ready substitute for a conventional barrier having columns with reflecting mirrors, and which requires power supply to only one column, while reducing blind areas in the surveillance.

Another object is to provide a safety barrier as above, whose alignment during setup is easier than for prior barriers, particularly barriers using reflecting mirrors.

Still another object is to provide said barrier so that it is less sensitive to vibration with respect to barriers with reflecting mirrors.

A further object is to provide said barrier so that it is less vulnerable to tampering than prior barriers.

Still another object is to provide a barrier having the above advantages, at a manufacturing cost lower than an equivalent prior barrier.

The above and other objects and advantages, such as will appear from the following description, are achieved by the invention with an optoelectronic safety barrier having the features defined in claim 1. Other advantageous features of the invention are set out in the dependent claims. US 2005/017157 discloses a light barrier comprising two optical receivers on an assembly on one side of the barrier, each optical receiver having a field of view encompassing the entire pattern provided on the opposite assembly.

D2 = US 2012/268274 also discloses a light barrier for detecting intrusions through an opening, which in one embodiment comprises on one side of the opening one or more cameras with overlapping views on a pattern provided on the other side of the opening; the camera views are compared with a reference image, so that any deviation is indicative of intrusion.

A few preferred embodiments of the invention are described below, given by way of non-limiting example, with reference to the accompanying drawings, in which:
Fig. 1 is a schematic side view of a barrier having two cameras, according to a preferred embodiment of the invention;
Fig. 2 is a front view of a passive column belonging to the barrier of Fig. 1;
Figs. 3 and 4 are images respectively taken by each of the two cameras belonging to the barrier of Fig. 1;
Figs. 5 and 6 are the same images of Figs. 3 and 4, after processing with an algorithm for the extraction of patterns;
Fig. 7 is a view similar to Fig. 1, showing the presence of a foreign object in the passage;
Figs. 8 and 9 are images respectively taken by the two cameras of the barrier when the situation is as illustrated in Fig. 7;
Figs. 10 and 11 are the same images of Figs. 8 and 9, after processing with an algorithm for the extraction of patterns;
Fig. 12 is a view similar to Fig. 7, for a different position of the foreign object in the passage;
Figs. 13 and 14 are images of the patterns when the situation is as illustrated in Fig. 12;
Fig. 15 is the image of Fig. 6 after flipping around axis X-X;
Fig. 16 is a flowchart showing, in a simplified form, a procedure for the alignment and initial setup of the barrier of Fig. 1;
Fig. 17 is a flowchart showing a simplified procedure for detection, used with the barrier of Fig. 1.

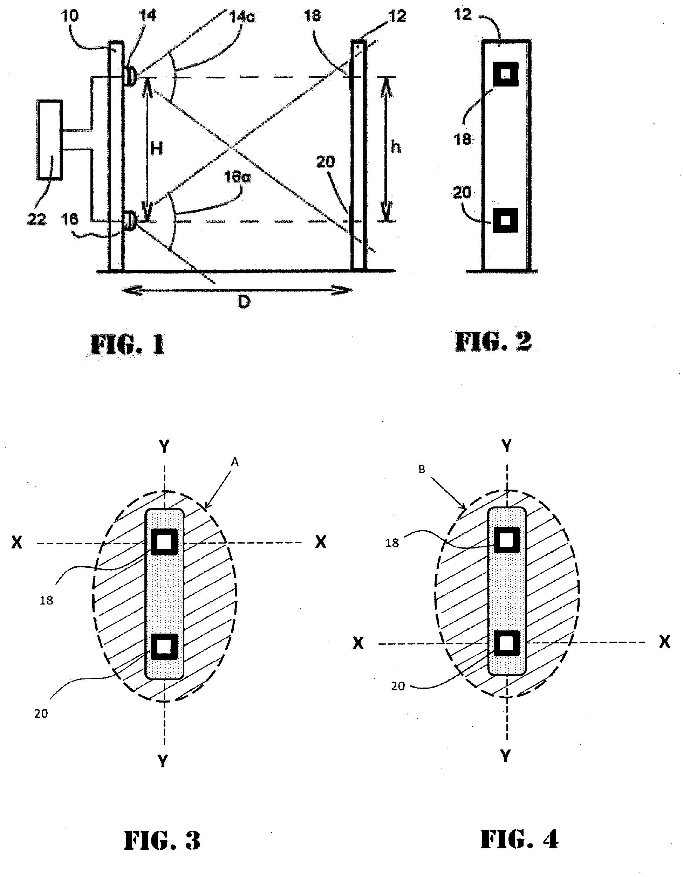

With reference to Fig. 1, two vertical columns 10, 12, which will be referred to as "active column" and "passive column", respectively, are located on respective opposite sides of an intervening passage to be monitored, and having a width D equal to the distance between the two columns. The active column 10 carries a first camera 14 and a second camera 16 arranged beneath camera 14. The cameras 14, 16 have respective conventional light sensors (not shown) and are preferably associated with respective illuminators (also not shown), and have similar optical characteristics with parallel, horizontal optical axes, directed toward the passive column 12, which are spaced with an inter-axial distance H.

Two patterns 18, 20 are printed or affixed on passive column 12. As exemplified in Fig. 2, the patterns consist of respective identical square contours or frames, whose centroids are aligned with the optical axes of the respective cameras 14, 16; in other words, the distance h between the centroids of the two patterns is equal to the distance H between the optical axes of the two cameras. The rectangular patterns 18, 20 are of a contrasting color with the remaining surface of the column: eg. a contour can be colored black with reflectivity of about 5%, at the wavelength of operation of the sensor, and the internal and external parts can be a highly reflective surface, with a reflectivity of 90%, although other colors are also possible. The field of view of each camera 14, 16 is wide enough to embrace both patterns 18, 20, as shown in 14α, 16α. The two cameras 14, 16 are supplied with power via active column 10 (not shown) and are operatively connected with a control unit 22. The control unit 22 cyclically executes a control program which receives the respective output signals of the two cameras 14, 16 and processes them as described below.

The image A taken by camera 14 will be substantially as shown on Fig. 3, where the pattern 18 which is aligned with the axis of the lens appears in the center of the image, while the offset pattern 20 is located at a lower position with respect to the horizontal midline of the image denoted as X-X, and its distance from pattern 18 depends on the distance h and the distance D. Since in the preferred case the camera 16 has geometric characteristics and optical properties equal to those of camera 14, its image B of the patterns 18 and 20 will be similar to that generated by camera 14 although in this case pattern 18 is located above the horizontal midline (X-X) of the image, and pattern 20 is aligned with the axis of the lens, and accordingly appears as in Fig. 4. (It should be understood that Figs. 3 and 4 are respective portions, in the environs of column 12, of the scene shot by the two cameras). Therefore, if the active and passive columns are aligned and parallel to each other, the images of Figs. 3 and 4 will be identical except that they will be vertically overturned about axis X with respect to each other, corresponding to the position of the respective camera (within desired tolerances).

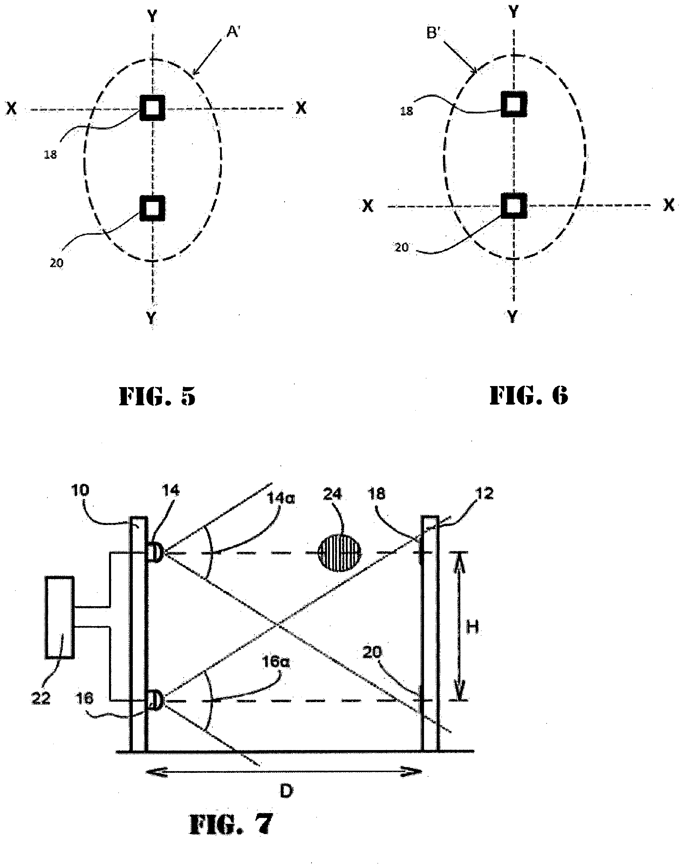

The images of Fig. 3 and Fig. 4 are then processed, using known techniques of digital processing of images, to convert them to the binary (i.e. black-and-white) images A' of Fig. 5 and B' of Fig. 6, respectively, thereby extracting the patterns 18 and 20. It is preferred to operate on binary images because the execution of algorithms for comparing or measuring is thus faster and more reliable.

It is well known that a binary image can be easily obtained from a grayscale image by setting to black the points of the image having a gray level below a given threshold and, conversely, setting to white all points having a gray level above that threshold. The image thus obtained is sure to comprise the two patterns, plus other extraneous black flecks or spots depending on the context of the scene. The binary image is then further processed to remove such indesirable black spots, in order to better isolate the patterns. For this purpose, a white or gray area of an appreciable width is defined outside the black frame and the black spots that are irregular or unconnected or comprising a number of pixels below a certain value or not containing a number of white pixels are eliminated by means of suitable algorithms.

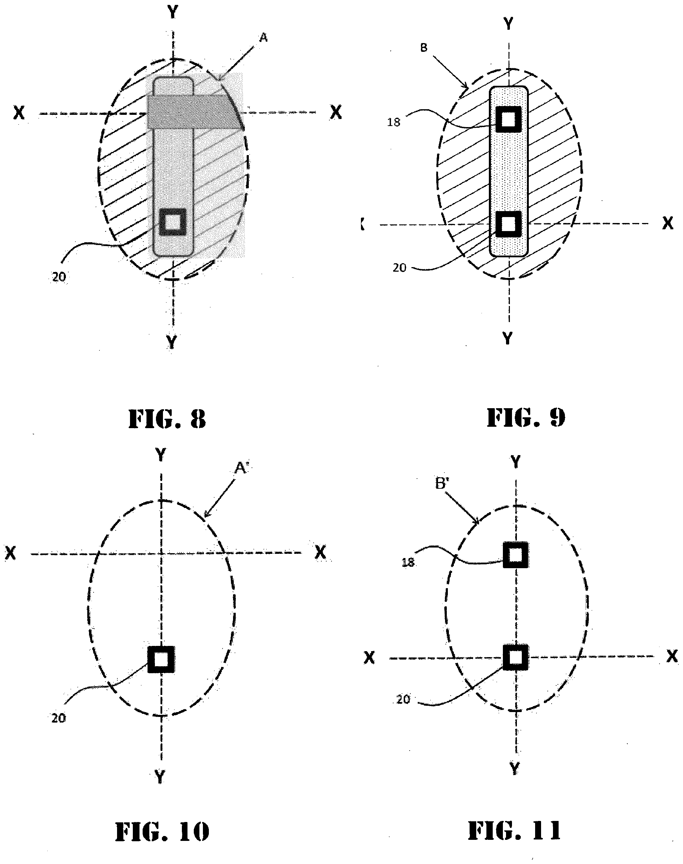

Referring now to Fig. 7, if an opaque cylindrical object 24 is now placed somewhere along the optical axis of camera 14, having a diameter such as to shield pattern 18, the image generated by camera 14 will now be as in Fig. 8, while the image from camera 16, as shown on Fig. 9, is still identical to Fig. 4, because the cylindrical object 24 does not mask any of the two patterns 18 and 20 in the image from that camera. Figs. 10 and 11 represent the binary images A' and B' generated in this case by the respective cameras after extraction of the patterns.

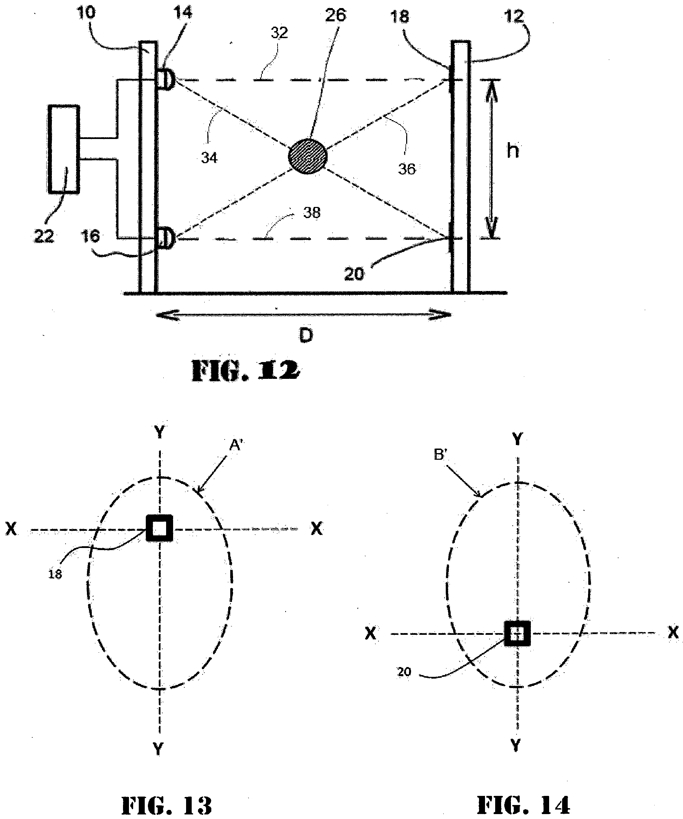

Referring now to Fig. 12, if, on the other hand, the opaque cylindrical object is moved to position 26, the images of the patterns from both cameras are different from those of Figs. 3 and 4, and will be modified according to Figs. 13 and 14, respectively.

In general, it can be seen that the presence of an obstacle located between the two columns at any position along rays 32 and 36, connecting camera 14 to the patterns 18 and 20, and similarly rays 36 and 38 for camera 16, will lead to alterations in at least one of the images from the respective cameras. Depending on the size, shape and position of the obstacle, such alterations could be the disappearance of one or both patterns in the images taken, or in other cases the mutilation of one of the patterns.

Therefore, as known also from the prior art, and as described in more detail below, the monitoring of the barrier is implemented by cyclically shooting the passive column with both cameras and then continuously comparing the current binary image of the patterns from each camera with a stored reference pattern image, which is the image produced by a camera when the passage is free from intrusions; the control unit will signal a fault condition whenever the two images are not identical; such discrepancy may be due either to internal faults of the cameras or to objects that are introduced into the passage and which therefore mask one or more of said patterns and alter, as mentioned above, the images taken by either or both cameras.

This method provides the advantage of checking the proper operation of the cameras by "cross-monitoring" their binary pattern images by the intermediary of the reference pattern. This will improve the safety against failure or degradation of one of the cameras, as well as against external tampering, either deliberate or unintentional.

In order to simplify and speed up the execution of the algorithm which compares the reference binary image with the current image, it is sufficient to perform the search for the patterns 18 and 20 in the image from camera 14 only in the neighborhood of the vertical midline Y-Y of the captured image, and preferably only in the neighborhood of the center and in its lower half, while, for camera 16, the pattern search is only performed in the neighborhood of the vertical midline Y-Y of the captured image, and preferably only around the center and in its upper half.

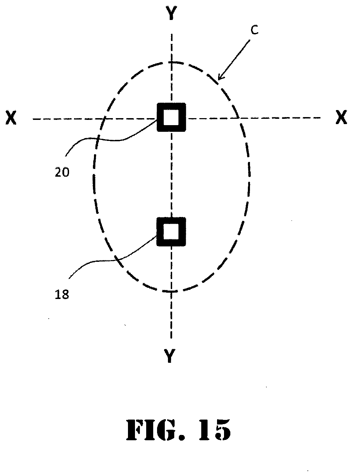

This selection of a limited portion of the image can be easily carried out by known techniques of digital processing, as will be apparent to those skilled in the art. The reference image, common for both cameras, is obtained by a procedure of initial setup that is performed in two successive steps; first the two columns are aligned, then the reference image is extracted and stored. According to a preferred embodiment, in order to align the two columns 10, 12 on the sides of the passage, the first camera 14 obtains a binary image A' of the pattern, shown on Fig. 5; the second camera 16 also obtains a binary image B' of the pattern (Fig. 6); image B' is then overturned or flipped vertically about axis X-X, thereby obtaining an image C (Fig. 15). It can be seen that, after overturning with respect to axis X-X, if the two images A' and C are superposed with respect to axes X-X and Y-Y, then when the system operates correctly the binary images of the two patterns must coincide, within desired tolerances.

If they do not coincide, this may be due to circuit faults or to positioning errors in the installation of the columns, for example angular deviations, or distance, or the like; in this case this procedure must be repeated with successive adjustments of the system until the comparison has a successful outcome. The two columns are considered as being aligned when the superposed binary images from the cameras are coincident, within tolerances. When the two columns are aligned, the image of coincidence is stored in the system to serve as a reference image, in common for both cameras.

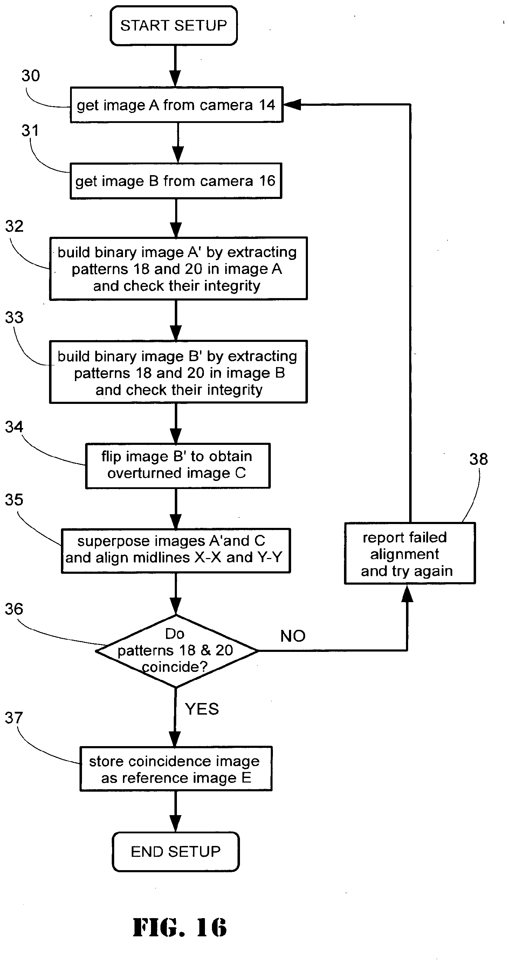

The procedure of initial set-up is illustrated in more detail with reference to the flowchart of Fig. 16. At block 30, an image A is obtained from camera 14; at block 32, the patterns 18 and 20 are identified in image A, producing the binary image A'; also, the integrity of the two patterns is checked (e.g., a square should not show breaks). In block 31, an image B is similarly obtained from camera 16; again, in block 33, the patterns 18 and 20 are identified in image B and their integrity is checked, thus arriving at the result shown in Fig. 6. In block 34, the binary image B' from camera 16 is flipped vertically through 180° about the horizontal axis X-X that intersects the optical axis of the lens, thus producing an image C (Fig. 15). At block 35, images A' and C are superposed with reference to midlines X-X and Y-Y. Finally, at block 36, the images A' and C are compared to verify equality and superposition of the two patterns 18 and 20 (in size, shape and position), within predetermined tolerances.

If the result of the comparison in block 36 is successful, block 37 is executed, to store the coincident image of the two patterns (or possibly their average in order to take into account the tolerances) as a reference image E, and setup is then terminated. If, on the other hand, the comparison reveals discrepancies, block 38 is executed, where a report is issued that the procedure has failed and the set-up procedure returns to block 30.

Obviously, the initial alignment and set-up procedure is to be repeated whenever the distance between the two columns or the shape or size of the patterns is changed. Once the procedure of initial alignment and set-up has been successfully completed, the control program proceeds to intrusion detection, using the reference image E.

According to the invention the system cyclically compares the reference image E, which represents the safe condition, with the current image A and with the current flipped image C coming from the respective cameras 14 and 16: if an inequality is found between reference image E and current image A or C, the system issues an alarm signal showing the condition of intrusion.

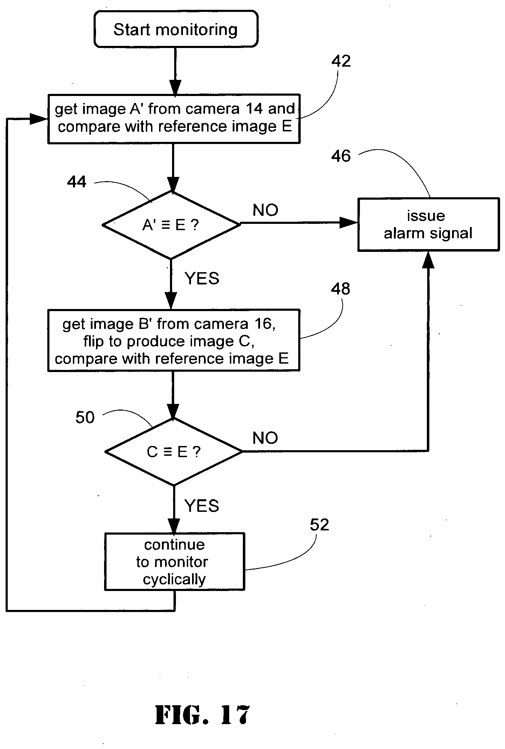

In more detail, and now referring to Fig. 17, at block 42 the routine receives image A from camera 14, and derives from it the binary image A' of the patterns; at block 44, if the comparison of binary image A' with reference pattern E detects any discrepancies between A' and E, then the processing forks to block 46, where an alarm signal is issued; if, on the other hand, A' and E are found equal, processing forks to block 48. In block 48, the binary image B' of the patterns is derived from the image B received from camera 16, and the binary image is then flipped to obtain image C, as already seen above; in block 50, if the comparison between C and E detects discrepancies, the process forks to alarm block 46, otherwise the process continues to block 52, from which it returns to the first block 42 to repeat the process, and so on cyclically.

It can be seen that the system is capable of detecting not only intrusions, but also any tampering attempts such as, e.g., a change in the distance D between the active column and the passive column: in fact, if a column is moved to approach it to the other, the device detects that the size of current image A' or C is larger than the size of reference image E. This condition is sufficient to determine a fault situation that gives rise to the issue of an alarm signal.

Although the patterns displayed on the passive column are shown as square frames in the examples of implementation described above, other shapes are possible, such as triangles, circles, rhombuses, crosses, and so on. Also, although in the preferred embodiment of the barrier the active column carries two cameras and the passive column carries two corresponding patterns, one or more additional cameras could be arranged on the active column in intermediate positions between the other two, with corresponding additional patterns affixed on the passive column. It will be appreciated that the teachings of the invention can be easily extended to the case of three or more cameras and patterns, by performing three or more comparisons as appropriate.

From the above description it will be evident to those skilled in the art that the barrier according to the invention is able to detect an intruding object in any position crossing the rays of any camera to any of the patterns, i.e. also in intermediate areas where a conventional barrier would be blind.

It will be appreciated that the barrier of the invention can be used as direct replacement of a barrier based on photodiodes, with a less critical installation and at a lower cost, mainly because electrical connections are only required for the active column. It should be understood that, although the description mentions "columns" supporting cameras and patterns, the word "column" should be understood to refer not only to vertical pillars or poles, but also to generic stands capable of supporting the cameras or the patterns, even mere portions of walls or other architectural elements. Moreover, although the columns are, for simplicity, assumed to be vertical in the description, they could be differently arranged, such as horizontally or obliquely, e.g. when they define a passage through a trap door or a ship hatch. Thus, the term "column", as used in the claims, should be understood to also include all the above extended meanings.

## Claims

1. An optoelectronic safety barrier for detecting the intrusion of persons through a passage defined by two opposite sides, comprising:
- an active column (10) located on a first one of said sides of the passage, the active column bearing a first and a second cameras (14,16) having parallel optical axes directed across the passage towards the opposite side;
- a passive column (12) located on the opposite side of the passage and bearing two identical geometrical patterns (18, 20) which are respectively aligned with the optical axes of said first and second cameras and at equal distances from the respective cameras, the field of view of each of said cameras (14, 16) on the active column (10) being such that it encompasses both said patterns;
- a control system (22) adapted to cyclically execute the following steps:
- acquiring a first current image (A) from said first camera (14) and a second current image (B) from said second camera (16),
- flipping the second current image (B) about a line (X-X) at right angles to the active column (10) to obtain a flipped second current image (C),
- overlapping and comparing said first current image (A) and said flipped second current image (C), respectively, with a desired stored reference image (E), and
- issuing an alarm signal whenever a difference is found between the reference image (E) and either one of said first current image (A) and said flipped second current image (C).

2. The optoelectronic safety barrier of claim 1, **characterized in that** each of said patterns (18, 20) comprises a shape having a low reflectivity set on a light background having a high reflectivity.

3. The optoelectronic safety barrier of any of claims 1 or 2, **characterized in that** said patterns (18, 20) have the shape of square frames.

4. The optoelectronic safety barrier of any of claims 1 or 2, **characterized in that** said patterns (18, 20) have the shape of circular crowns.

5. The optoelectronic safety barrier of any of claims 1 to 4, **characterized in that** the control system (22) is programmed for executing an initial setup procedure in a condition of clear passage, in which a first image (A') taken by the first camera (14) is compared with a second image (C) obtained by flipping an image (B') taken by the second camera (16) about a line (X-X) at right angles to the active column, and the set-up procedure is considered successfully concluded if said images (A', C) are identically superposable.

6. The optoelectronic safety barrier of claim 5, **characterized in that** the control system is further configured to store, after successful conclusion of the setup procedure, one of the image from the first camera (A', C) and the flipped and aligned image from the second camera as a reference image (E).

7. The optoelectronic safety barrier of claim 5, **characterized in that** the control system is further configured to store, after a successful conclusion of the set-up procedure, the average of the image from the first camera (A') and the flipped and aligned image from the second camera (C) as a reference image (E).

8. The optoelectronic safety barrier of any of claims 1 to 7, **characterized in that** the control system is further configured to illuminate said patterns (18, 20) with a modulated or pulsed light during monitoring.

## Patentansprüche

1. Eine optoelektronische Sicherheitsschranke zum Erfassen des Eindringens von Personen durch einen Durchgang, der durch zwei gegenüberliegende Seiten bestimmt ist, Folgendes umfassend:
- eine aktive Säule (10), positioniert auf einer ersten der Seiten des Durchgangs, wobei die aktive Säule eine erste und eine zweite Kamera (14, 16) mit parallelen optischen Achsen trägt, die über den Durchgang hinweg zur gegenüberliegenden Seite hin gerichtet sind;
- eine passive Säule (12), positioniert auf der gegenüberliegenden Seite des Durchgangs, die zwei identische geometrische Muster (18, 20) trägt, welche mit den optischen Achsen der ersten bzw. der zweiten Kamera ausgerichtet sind und sich in gleichen Abständen von den entsprechenden Kameras befinden, wobei das Blickfeld jeder der Kameras (14, 16) an der aktiven Säule (10) derart ist, dass es die beiden Muster umfasst;
- ein Steuerungssystem (22), ausgebildet, um zyklisch folgende Schritte durchzuführen:
- Aufnahme eines ersten aktuellen Bildes (A) von der ersten Kamera (14) und eines zweiten aktuellen Bildes (B) von der zweiten Kamera (16),
- Drehen des zweiten aktuellen Bildes (B) um eine Linie (X-X) in rechten Winkeln zur aktiven Säule (10), um ein gedrehtes zweites aktuelles Bild (C) zu erhalten,
- Überlappen und Vergleichen des ersten aktuellen Bildes (A) und des gedrehten zweiten aktuellen Bildes (C) jeweils mit einem gewünschten gespeicherten Referenzbild (E), und
- Ausgabe eines Alarmsignals immer dann, wenn ein Unterschied zwischen dem Referenzbild (E) und entweder dem ersten aktuellen Bild (A) oder dem gedrehten zweiten aktuellen Bild (C) festgestellt wird.

2. Die optoelektronische Sicherheitsschranke gemäß Anspruch 1, **dadurch gekennzeichnet, dass** jedes der Muster (18, 20) eine Form mit geringem Reflexionsvermögen umfasst, die auf einen hellen Hintergrund mit hohem Reflexionsvermögen aufgesetzt ist.

3. Die optoelektronische Sicherheitsschranke gemäß einem beliebigen der Ansprüche 1 oder 2, **dadurch gekennzeichnet, dass** die Muster (18, 20) die Form quadratischer Rahmen haben.

4. Die optoelektronische Sicherheitsschranke gemäß einem beliebigen der Ansprüche 1 oder 2, **dadurch gekennzeichnet, dass** die Muster (18, 20) die Form kreisförmiger Kronen haben.

5. Die optoelektronische Sicherheitsschranke gemäß einem beliebigen der Ansprüche 1 bis 4, **dadurch gekennzeichnet, dass** das Steuerungssystem (22) programmiert ist, um in einem Zustand des freien Durchgangs einen Anfangseinstellungs-Vorgang durchzuführen, in dem ein erstes Bild (A'), das von der ersten Kamera (14) aufgenommen wurde, mit einem zweiten Bild (C) verglichen wird, das erhalten wird durch Drehen eines Bildes (B'), das von der zweiten Kamera (16) aufgenommen wurde, um eine Linie (X-X) in rechten Winkeln zur aktiven Säule, wobei der Einstellungsvorgang als erfolgreich abgeschlossen betrachtet wird, wenn die Bilder (A', C) identisch übereinander gelegt werden können.

6. Die optoelektronische Sicherheitsschranke gemäß Anspruch 5, **dadurch gekennzeichnet, dass** das Steuerungssystem weiter konfiguriert ist, um nach erfolgreichem Abschluss des Einstellungsvorgangs entweder das Bild von der ersten Kamera (A', C) oder das gedrehte und ausgerichtete Bild von der zweiten Kamera als Referenzbild (E) zu speichern.

7. Die optoelektronische Sicherheitsschranke gemäß Anspruch 5, **dadurch gekennzeichnet, dass** das Steuerungssystem weiter konfiguriert ist, um nach erfolgreichem Abschluss des Einstellungsvorgangs den Mittelwert des Bildes von der ersten Kamera (A') und des gedrehten und ausgerichteten Bildes von der zweiten Kamera (C) als Referenzbild (E) zu speichern.

8. Die optoelektronische Sicherheitsschranke gemäß einem beliebigen der Ansprüche 1 bis 7, **dadurch gekennzeichnet, dass** das Steuerungssystem weiter konfiguriert ist, um die Muster (18, 20) während der Überwachung mit einem modulierten oder pulsierenden Licht zu beleuchten.

## Revendications

1. Barrière de sécurité optoélectronique pour la détection de l'intrusion de personnes à travers un passage défini par deux côtés opposés, comprenant :
- une colonne active (10) située sur un premier desdits côtés du passage, la colonne active supportant une première et une deuxième caméra (14, 16) ayant des axes optiques parallèles dirigés à travers le passage en direction du côté opposé ;
- une colonne passive (12) située sur le côté opposé du passage et supportant deux motifs géométriques identiques (18, 20) qui sont respectivement alignés avec les axes optiques desdites première et deuxième caméras et à des distances égales des caméras respectives, le champ de vision de chacune desdites caméras (14, 16) de la colonne active (10) étant tel qu'il englobe lesdits motifs ;
- un système de contrôle (22) conçu pour exécuter de manière cyclique les étapes suivantes :
- acquisition d'une première image courant (A) à partir de ladite première caméra (14) et d'une deuxième image courant (B) à partir de ladite deuxième caméra (16),
- inversion de la deuxième image courant (B) autour d'une ligne (X-X) à angle droit par rapport à la colonne active (10) afin d'obtenir une deuxième image courante inversée (C),
- superposition et comparaison de ladite première image courante (A) et de ladite deuxième image courante inversée (C) respectivement avec une image de référence stockée (E) souhaitée et
- émission d'un signal d'alarme lorsqu'une différence est détectée entre l'image de référence (E) et une desdites première image courante (A) et deuxième image courante inversée (C) .

2. Barrière de sécurité optoélectronique selon la revendication 1, **caractérisée en ce que** chacun desdits motifs (18, 20) présente une forme présentant une faible réflectivité placée sur un arrière-plan clair ayant une haute réflectivité.

3. Barrière de sécurité optoélectronique selon l'une des revendications 1 ou 2, **caractérisée en ce que** lesdits motifs (18, 20) présentent la forme de cadres carrés.

4. Barrière de sécurité optoélectronique selon l'une des revendications 1 ou 2, **caractérisée en ce que** lesdits motifs (18, 20) présentent la forme de couronnes circulaires.

5. Barrière de sécurité optoélectronique selon l'une des revendications 1 à 4, **caractérisée en ce que** le système de contrôle (22) est programmé pour exécuter une procédure de configuration initiale dans une condition de libre passage, dans laquelle une première image (A') prise par la première caméra (14) est comparée avec une deuxième image (C) obtenue en inversant une image (B') prise par la deuxième caméra (16) autour d'une ligne (X-X) à angle droit par rapport à la colonne active, et la procédure de configuration est considérée comme réussie si lesdites images (A', C) sont parfaitement superposables.

6. Barrière de sécurité optoélectronique selon la revendication 5, **caractérisée en ce que** le système de contrôle est en outre conçu pour stocker, après la réussite de la procédure de configuration, une parmi l'image provenant de la première caméra (A', C) et l'image inversée et alignée provenant de la deuxième caméra en tant qu'image de référence (E).

7. Barrière de sécurité optoélectronique selon la revendication 5, **caractérisée en ce que** le système de contrôle est en outre conçu pour stocker, après la réussite de la procédure de configuration, la moyenne de l'image provenant de la première caméra (A') et de l'image inversée et alignée provenant de la deuxième caméra (C) en tant qu'image de référence (E).

8. Barrière de sécurité optoélectronique selon l'une des revendications 1 à 7, **caractérisée en ce que** le système de contrôle est en outre conçu pour éclairer lesdits motifs (18, 20) avec une lumière modulée ou pulsée pendant la surveillance.
